# EUROPEAN PATENT APPLICATION

(11) **EP 4 804 603 A1**
(43) Date of publication of application: **09.09.2026**
(21) Application number: 24899617.5
(22) Date of filing: 20.11.2024
(51) Int. Cl.: H04W 24/08

(54) **DATA MEASUREMENT METHOD AND APPARATUS**

(30) Priority: 04.12.2023 CN 202311652181
(71) Applicant: Huawei Technologies Co., Ltd., Shenzhen, Guangdong 518129 (CN)
(72) Inventor: YU, Deyun, Shenzhen, Guangdong 518129 (CN); LIU, Jun, Shenzhen, Guangdong 518129 (CN)
(74) Representative: Pfenning, Meinig & Partner mbB
(86) International application number: PCT/CN2024/133199
(87) International publication number: WO 2025/118976

(57) **Abstract**

This application provides a data measurement method and an apparatus to implement end-to-end automatic measurement on a wireless network and a bearer network. The method includes: A first transmission device receives control information and service data, where the control information includes at least one of the following of the service data: first flow identification information, measurement manner information, measurement periodicity information, or measurement type information, and the first flow identification information is flow identification information of the service data in the wireless network; the first transmission device measures the service data based on the control information to obtain first measurement result information; and the first transmission device sends the first measurement result information to a first network management device.

## Description

This application claims priority to Chinese Patent Application No. 202311652181.1, filed with the China National Intellectual Property Administration on December 4, 2023 and entitled "DATA MEASUREMENT METHOD AND APPARATUS", which is incorporated herein by reference in its entirety.

### TECHNICAL FIELD

This application relates to the communication field, and more specifically, to a data measurement method and an apparatus.

### BACKGROUND

In quality of service (quality of service, QoS) monitoring of a wireless network, wireless network maintenance personnel need to manually obtain flow identification information of service data that needs to be measured, and manually start flow measurement. After measuring the service data, a communication device in the wireless network reports measurement result information to a network management device in the wireless network, and the network management device in the wireless network determines QoS of the wireless network based on the measurement result information. In QoS monitoring of a bearer network, bearer network maintenance personnel also need to manually obtain flow identification information of service data that needs to be measured, and manually start flow measurement. After measuring the service data, a communication device in the bearer network reports measurement result information to a network management device in the bearer network, and the network management device in the bearer network determines QoS of the bearer network based on the measurement result information.

When service data needs to be transmitted over a wireless network and a bearer network, because the encapsulation format and flow identifier definition of the service data in the wireless network are inconsistent with those in the bearer network, different networks cannot exchange measurement information. Therefore, end-to-end (device-to-device) automatic transmission measurement on the wireless network and the bearer network cannot be implemented.

### SUMMARY

This application provides a data measurement method and an apparatus to implement end-to-end (device-to-device) automatic measurement on a wireless network and a bearer network.

According to a first aspect, a data measurement method is provided. The method may be applied to a first transmission device in a bearer network, for example, may be performed by the first transmission device, or may be performed by a component (for example, a chip or a chip system) configured in the first transmission device, or may be implemented by a logical module or software that can implement all or some functions of the first transmission device. This is not limited in this application.

For example, the method includes: The first transmission device receives control information and service data, where the control information includes at least one of the following of the service data: first flow identification information, measurement manner information, measurement periodicity information, or measurement type information, and the first flow identification information is flow identification information of the service data in the wireless network; the first transmission device measures the service data based on the control information to obtain first measurement result information; and the first transmission device sends the first measurement result information to a first network management device.

Based on the foregoing technical solution, a radio access network device or a core network device in the wireless network may send, to a transmission device (the first transmission device) in the bearer network, the control information used to measure the service data, and the transmission device in the bearer network may automatically measure the service data from the wireless network based on the control information. Compared by manual flow identification information input by wireless network maintenance personnel and bearer network maintenance personnel, this application can implement end-to-end (device-to-device) automatic measurement on a wireless network and a bearer network.

With reference to the first aspect, in some implementations of the first aspect, the method further includes: The first transmission device converts the first flow identification information into second flow identification information, where the second flow identification information is flow identification information of the service data in the bearer network, and the first measurement result information includes a mapping relationship between the first flow identification information and the second flow identification information.

Optionally, a uniform network management device may allocate uniform flow identification information, and the flow identification information of the service data in the wireless network is the same as that in the bearer network. In this optional solution, the first transmission device does not need to convert the flow identification information of the service data, and the radio access network device, the core network device, and the transmission device (including the first transmission device) that is in the bearer network may measure the service data based on the uniform flow identification information. The uniform network management device may be understood as a device that uniformly manages a network management device in the wireless network and a network management device in the bearer network.

With reference to the first aspect, in some implementations of the first aspect, the measurement manner information indicates a per-packet measurement manner or a sampling measurement manner.

With reference to the first aspect, in some implementations of the first aspect, the measurement type information indicates at least one of the following: packet loss rate measurement, packet loss quantity measurement, delay measurement, throughput measurement, or jitter measurement.

With reference to the first aspect, in some implementations of the first aspect, the control information and the service data are carried in a user plane packet.

With reference to the first aspect, in some implementations of the first aspect, the control information is carried in an internet protocol IP extension header, a user datagram protocol UDP extension header, or a general packet radio service tunneling protocol user plane GTPU extension header of the user plane packet. In this implementation, after receiving the user plane packet, the first transmission device performs a snooping (snooping) operation on the user plane packet, to obtain the control information.

With reference to the first aspect, in some implementations of the first aspect, the control information is carried in a control plane packet, and the service data is carried in a user plane packet. In this implementation, the control information and the service data are respectively sent to the first transmission device by using different information/packets.

With reference to the first aspect, in some implementations of the first aspect, the control information is carried in an IP extension header, a transmission control protocol TCP extension header, a UDP extension header, or a GTPU extension header of the control plane packet, and a destination address of the control plane packet is address information of a radio access network device or a core network device. In this implementation, after receiving the control plane packet, the first transmission device performs a snooping operation on the control plane packet, to obtain the control information.

With reference to the first aspect, in some implementations of the first aspect, the control plane packet includes a GTPU ECHO packet, an internet control message protocol ICMP packet, a two-way active measurement protocol TWAMP packet, or a UDP packet.

With reference to the first aspect, in some implementations of the first aspect, the control information is carried in an IP extension header or an IP packet payload of the control plane packet, and a destination address of the control plane packet is address information of the first transmission device. In this implementation, the radio access network device and the core network device do not send the control information by using an extended existing packet, but send the control information by using a specific/newly constructed control plane packet. Because the destination address of the control plane packet is the address information of the first transmission device, after receiving the control plane packet, the first transmission device may directly parse the control plane packet, to obtain the control information.

With reference to the first aspect, in some implementations of the first aspect, the control plane packet includes an ICMP packet, a TCP packet, a UDP packet, a stream control transmission protocol SCTP packet, or another IP packet.

According to a second aspect, a data measurement method is provided. The method may be applied to a radio access network device or a core network device, for example, may be performed by the radio access network device or the core network device, or may be performed by a component (for example, a chip or a chip system) configured in the radio access network device or the core network device, or may be implemented by a logical module or software that can implement all or some functions of the radio access network device or the core network device. This is not limited in this application.

The method includes: sending control information and service data to a first transmission device, where the control information includes at least one of the following of the service data: flow identification information, measurement manner information, measurement periodicity information, or measurement type information, the control information is used to control at least one transmission device in a bearer network to measure the service data, and the at least one transmission device includes the first transmission device; and sending second measurement result information to a second network management device, where the second measurement result information is obtained by measuring the service data based on the control information.

The method provided in the second aspect is a radio access network device or core network device side method corresponding to the first aspect. For beneficial effects thereof, refer to the first aspect.

With reference to the second aspect, in some implementations of the second aspect, the measurement manner information indicates a per-packet measurement manner or a sampling measurement manner.

With reference to the second aspect, in some implementations of the second aspect, the measurement type information indicates at least one of the following: packet loss rate measurement, packet loss quantity measurement, delay measurement, throughput measurement, or jitter measurement.

With reference to the second aspect, in some implementations of the second aspect, the control information and the service data are carried in a user plane packet.

With reference to the second aspect, in some implementations of the second aspect, the control information is carried in an IP extension header, a UDP extension header, or a GTPU extension header of the user plane packet.

With reference to the second aspect, in some implementations of the second aspect, the control information is carried in a control plane packet, and the service data is carried in a user plane packet.

With reference to the second aspect, in some implementations of the second aspect, the control information is carried in an IP extension header, a TCP extension header, a UDP extension header, or a GTPU extension header of the control plane packet, and a destination address of the control plane packet is address information of a radio access network device or a core network device.

With reference to the second aspect, in some implementations of the second aspect, the control plane packet includes a GTPU ECHO packet, an ICMP packet, a TWAMP packet, or a UDP packet.

With reference to the second aspect, in some implementations of the second aspect, the control information is carried in an IP extension header or an IP packet payload of the control plane packet, and a destination address of the control plane packet is address information of the first transmission device.

With reference to the second aspect, in some implementations of the second aspect, the control plane packet includes an ICMP packet, a TCP packet, a UDP packet, an SCTP packet, or another IP packet.

According to a third aspect, a communication apparatus is provided. The apparatus may be used in the first transmission device according to the first aspect. The apparatus includes: a transceiver unit, configured to implement receiving and sending functions in the method according to the first aspect; and a processing unit, configured to implement a processing function like measuring service data in the method according to the first aspect.

According to a fourth aspect, a communication apparatus is provided. The apparatus may be used in the radio access network device or the core network device according to the second aspect. The apparatus includes: a transceiver unit, configured to implement receiving and sending functions in the method according to the second aspect; and a processing unit, configured to implement a processing function like measuring service data in the method according to the second aspect.

According to a fifth aspect, a communication apparatus is provided, including a processor and an interface circuit. The interface circuit is configured to receive a signal from another communication apparatus and transmit the signal to the processor, or send a signal from the processor to another communication apparatus. The processor implements the method according to any one of the first aspect, the second aspect, or the possible implementations of the first aspect and the second aspect by using a logic circuit or executing code instructions.

According to a sixth aspect, a communication system is provided, including the first transmission device in the method according to the first aspect and the radio access network device or the core network device in the method according to the second aspect.

According to a seventh aspect, a computer-readable storage medium is provided. The computer-readable medium stores a computer program. When the computer program is run on a computer, the method according to any one of the first aspect, the second aspect, and the possible implementations of the first aspect and the second aspect is performed.

According to an eighth aspect, a computer program product is provided, including a computer program. When the computer program is executed, the method according to any one of the first aspect, the second aspect, and the possible implementations of the first aspect and the second aspect is implemented.

The solutions provided in the third aspect to the eighth aspect are used to implement or cooperate to implement the methods provided in the first aspect and the second aspect, and therefore, can achieve beneficial effects the same as or corresponding to those in the first aspect and the second aspect. Details are not described herein again.

### BRIEF DESCRIPTION OF DRAWINGS

FIG. 1 is a diagram of an architecture of a communication system to which an embodiment of this application is applicable;
FIG. 2 is a schematic flowchart of a QoS monitoring (monitor) solution in a wireless network;
FIG. 3 is a diagram of a flow measurement solution in a bearer network;
FIG. 4 is a diagram of end-to-end transmission measurement on a wireless network and a bearer network;
FIG. 5 is a schematic flowchart of a data measurement method according to an embodiment of this application;
FIG. 6 is a diagram of adding an internet protocol (internet protocol, IP) extension header to a general packet radio service (general packet radio service, GPRS) tunneling protocol user plane (tunneling protocol user plane, GTPU) user plane service packet;
FIG. 7 is a diagram of adding a user datagram protocol (user datagram protocol, UDP) extension header to a GTPU user plane service packet;
FIG. 8 is a diagram of adding a GTPU extension header to a GTPU ECHO packet;
FIG. 9 is a block diagram of a communication apparatus according to an embodiment of this application;
FIG. 10 is a block diagram of another communication apparatus according to an embodiment of this application; and
FIG. 11 is a block diagram of another communication apparatus according to an embodiment of this application.

### DESCRIPTION OF EMBODIMENTS

The following describes technical solutions of this application with reference to accompanying drawings.

Embodiments of this application may be applied to various communication systems, for example, a wireless local area network (wireless local area network, WLAN) system, a narrowband internet of things (narrowband internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronization code division multiple access, TD-SCDMA) system, a long term evolution (long term evolution, LTE) system, a satellite communication system, a sidelink (sidelink, SL) system, a 4th generation (fourth generation, 4G) system, a 5th generation (5th generation, 5G) system, a 6th generation (6th generation, 6G) system, or a new communication system emerging in the future. The communication system includes communication devices, and wireless communication may be performed between the communication devices by using an air interface resource. The communication devices may include a terminal device, a radio access network device, and a core network device. The radio access network device may also be referred to as a base station device. The air interface resource may include at least one of a time domain resource, a frequency domain resource, a code resource, and a spatial resource.

The terminal device in embodiments of this application may include various handheld devices, vehicle-mounted devices, wearable devices, or compute devices that have a wireless communication function, or other processing devices connected to a wireless modem. The terminal device may be a subscriber unit (subscriber unit), user equipment (user equipment, UE), a cellular phone (cellular phone), a smartphone (smartphone), a wireless data card, a personal digital assistant (personal digital assistant, PDA) computer, a tablet computer, a wireless modulator-demodulator (modulator-demodulator, modem), a laptop computer (laptop computer), a machine type communication (machine type communication, MTC) terminal, a wireless terminal in self-driving (self-driving), or the like. The user equipment includes vehicle user equipment. With emergence of internet of things (internet of things, IoT) technologies, more devices that previously do not have a communication function, for example, but not limited to, a household appliance, a transportation vehicle, a tool device, a service device, and a service facility, start to obtain a wireless communication function by being configured with a wireless communication unit, to access a wireless communication network and accept remote control. Such a device has the wireless communication function because the device is configured with the wireless communication unit, and is therefore classified as a wireless communication device. In addition, the terminal device may also be referred to as a mobile station (mobile station, MS), a mobile device, a mobile terminal, a wireless terminal, a handheld device (handset), a client, a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of the terminal device may be a terminal device, or may be an apparatus, for example, a chip system, that can support the terminal device in implementing the function. The apparatus may be installed in the terminal device. In embodiments of this application, the chip system may include a chip, or may include a chip and another discrete device. In the technical solution provided in embodiments of this application, an example in which the apparatus for implementing the function of the terminal device is a terminal device and the terminal device is UE is used to describe the technical solution provided in embodiments of this application.

The radio access network device in this application may be a device configured to communicate with a terminal device, or may be a device that connects the terminal device to a wireless network. The radio access network device may be a node in a radio access network. The radio access network device may be a base station (base station, BS), an evolved NodeB (evolved NodeB, eNodeB), a transmission reception point (transmission reception point, TRP), a home base station (for example, a home evolved NodeB or a home NodeB, HNB), a Wi-Fi access point (access point, AP), a mobile switching center, a next generation NodeB (next generation NodeB, gNB) in a 5G mobile communication system, a next generation base station in a 6th generation (6th generation, 6G) mobile communication system, a base station in a future mobile communication system, or the like. Alternatively, the radio access network device may be a module or unit that completes some functions of a base station, for example, may be a central unit (central unit, CU), a distributed unit (distributed unit, DU), an RRU, or a baseband unit (baseband unit, BBU). Alternatively, the radio access network device may be a device that functions as a base station in a D2D communication system, a V2X communication system, an M2M communication system, an IoT communication system, and the like. Alternatively, the radio access network device may be a radio access network device in a non-terrestrial network (non-terrestrial network, NTN). In other words, the radio access network device may be deployed on a high-altitude platform or a satellite. The radio access network device may be a macro base station, may be a micro base station or an indoor base station, or may be a relay node, a donor node, or the like. Certainly, the radio access network device may alternatively be a node in a core network.

The radio access network device provides a service for a cell, and the terminal device communicates with the cell by using a transmission resource (for example, a frequency domain resource or a spectrum resource) allocated by the radio access network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells are characterized by small coverage and low transmit power, and are applicable to providing a high-rate data transmission service.

The terminal device in this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some examples of the terminal device may be: a mobile phone (mobile phone), a pad (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), an uncrewed aerial vehicle, a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a 5G network, a terminal device in a future evolved public land mobile network (public land mobile network, PLMN), and the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, for example, smart watches or smart glasses, and include devices that dedicated to only one type of application function and need to work with other devices such as smartphones, for example, various smart bands or smart jewelry for monitoring physical signs.

In addition, the terminal device may alternatively be a terminal device in an internet of things (internet of things, IoT) system. An IoT is an important part in future development of information technologies. A main technical feature of the IoT is to connect things to a network by using a communication technology, to implement an intelligent network for human-machine interconnection and thing-thing interconnection. The IoT technology may implement massive connections, deep coverage, and terminal power saving by using, for example, a narrowband (narrowband, NB) technology.

In addition, the terminal device may further include sensors such as a smart printer, a train detector, and a gas station. Main functions of the terminal device include: collecting data (for some terminal devices), receiving control information and downlink data of a radio access network device, sending an electromagnetic wave, and transmitting uplink data to the radio access network device.

This application further provides a core network device. The core network device may include one or more core network elements. A 5G core network is used as an example. The 5G core network includes an access and mobility management function (access and mobility management function, AMF) network element responsible for services such as mobility management and access management, a session management function (session management function, SMF) network element responsible for session management, a user plane function (user plane function, UPF) network element responsible for data packet routing and forwarding and QoS control of a user plane, a policy control function (policy control function, PCF) network element, and the like. The core network elements may work independently, or may be combined to implement some control functions. For example, the AMF, the SMF, and the PCF may be combined to serve as a core network device.

The AMF network element is mainly responsible for mobility management in a mobile network, for example, user location update, user network registration, and user switching. The UPF network element is mainly responsible for forwarding and receiving user data in the terminal device. The UPF network element may receive user data from a data network, and transmit the user data to the terminal device via the radio access network device. The UPF network element may further receive user data from the terminal device via the radio access network device, and forward the user data to the data network. Transmission resources and scheduling functions that are used by the UPF network element to provide a service for the terminal device are managed and controlled by the SMF network element.

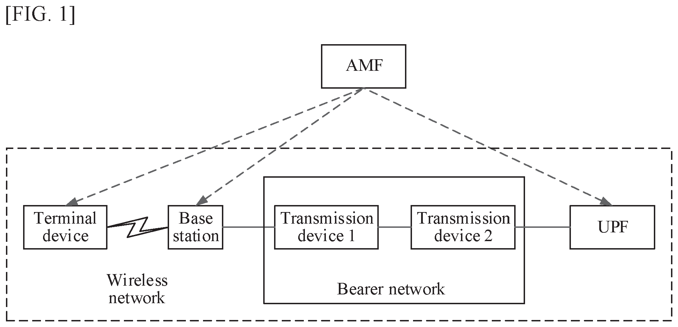

FIG. 1 is a diagram of an architecture of a communication system to which an embodiment of this application is applicable. The communication system includes a terminal device, a base station, an AMF, and a UPF in a wireless network, and a transmission device 1 and a transmission device 2 in a bearer network. The bearer network may be referred to as a wired network, and the transmission device may be referred to as a bearer device, a bearer node, a gateway device, or the like. In uplink transmission, a transmission path of service data is: the terminal device-the base station-the transmission device 1-the transmission device 2-the UPF. In downlink transmission, a transmission path of service data is: the UPF-the transmission device 2-the transmission device 1-the base station-the terminal device.

To facilitate understanding of the technical solutions in embodiments of this application, before the solutions in embodiments of this application are described, terms or concepts that may be used in embodiments of this application are first described.
1. Protocol data unit (protocol data unit, PDU) session: the protocol data unit session is a logical connection between a terminal device and a data network (data network, DN), and is used to provide a user plane connection between the terminal device and the DN.
2. Bearer network: The bearer network is a basic network that provides network connections for a radio access network (wireless network) and a core network, and includes an access router, an edge router, a core router, and the like. To meet requirements of 5G application scenarios, a 5G bearer network continuously evolves toward high bandwidth, low delay, network slicing, intelligence, and the like, and provides ultra-high bandwidth, ultra-low delay, and flexible and intelligent connection services for 5G networks.

To facilitate understanding of embodiments of this application, the following briefly describes technical solutions related to embodiments of this application.

### I. Wireless network measurement technology

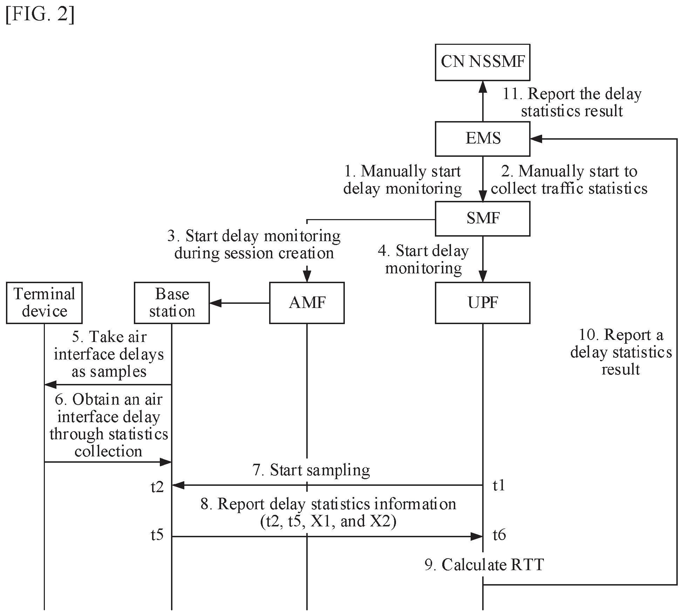

FIG. 2 is a schematic flowchart of a QoS monitoring solution in a wireless network. A specific process is as follows.
1. Manually deliver a man-machine language (man-machine language, MML) command on an SMF to start slice monitoring, and add an MML configuration to the SMF, where the MML configuration includes a slice identifier (identifier, ID), a maximum quantity of sessions, and measurement start/measurement stop, where the slice ID indicates specific services that are of specific slices and that are to be measured, the maximum quantity of sessions indicates specifications of the services to be measured, the measurement start indicates when to start measurement, and the measurement stop indicates when to stop measurement.
2. An element management system (element management system, EMS) manually starts to collect traffic statistics of key performance indicators (key performance indicators, KPIs).
3. The SMF performs sampling based on a quantity of users of a slice, and starts delay monitoring during session creation. Specifically, a response message sent by an AMF to a base station during session creation includes indication information indicating to start delay monitoring. The SMF needs to manage a delay monitoring task of a quality of service flow (QoS flow) and evaluate impact of a delay of the QoS flow on a system memory.
   A network slice subnet management function (network slice subnet management function, NSSMF) in a core network (core network, CN) delivers a maximum quantity of sessions of a slice to the SMF. The SMF needs to calculate a quantity of QoS flows based on a default traffic model of a product.
4. The SMF controls a UPF to start delay monitoring. For example, when there are a small quantity of slices, sampling may be performed at a fixed rate of 1% and a minimum quantity of users is limited. For example, the quantity of users cannot be less than 10.
5. The base station starts to take air interface delays as samples.
6. The base station obtains an air interface delay between the base station and a terminal device through statistics collection, for example, an uplink delay X1/a downlink delay X2.
7. The UPF starts sampling. A GTPU packet header carries a quality of service monitoring packet (QoS monitoring packet, QMP) mark. The UPF may perform sampling based on one packet every 10 ms. On the UPF, a sampling specification is controlled not to exceed 1% of a specification of the quantity of QoS flows.
8. The base station reports delay statistics information to the UPF.
9. The UPF calculates round trip time (round trip time, RTT), which is equal to X1+X2+(t6-t1)-(t5-t2).
10. The UPF generates an average delay, a minimum delay, a maximum delay, and a quantity of times of statistics collection of the base station-the UPF or the terminal device-the UPF based on a statistics periodicity (for example, 5 minutes/15 minutes) of traffic statistics, and reports a delay statistics result to the EMS.
11. The EMS reports the delay statistics result to the CN NSSMF, and the CN NSSMF implements performance statistics-collection and monitoring of slice-level delay KPIs.

### II. Bearer network measurement technology

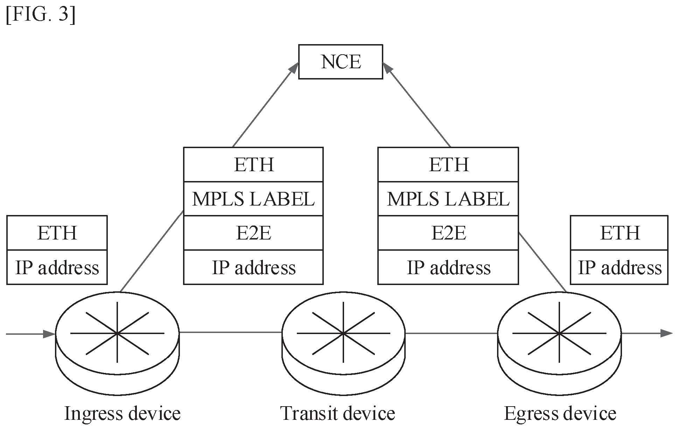

FIG. 3 is a diagram of a flow measurement solution in a bearer network. A flow measurement procedure that is for a service flow and that is started by the bearer network includes the following steps.
1. An ingress (ingress) device starts hop-by-hop flow detection for a service flow, and periodically reports measurement data (measurement result information) such as packet loss rate, delay, and jitter to a network management device in a bearer network, where the ingress device is understood as a head node connected to a radio access network device in the bearer network, and the network management device in the bearer network may be a network cloud engine (network cloud engine, NCE).
2. A transit (transit) device starts hop-by-hop flow detection for the service flow, and periodically reports measurement data such as packet loss rate, delay, and jitter to the network management device in the bearer network.
3. An egress (egress) device starts hop-by-hop flow detection for the service flow, and periodically reports measurement data such as packet loss rate, delay, and jitter to the network management device in the bearer network.
4. The network management device collects the measurement data reported by the ingress device, the transit device, and the egress device in the bearer network, performs segment-based calculation, and presents the packet loss rate, delay, jitter, and the like of each device (node)/link in the bearer network, to facilitate troubleshooting by operation and maintenance personnel.

ETH indicates Ethernet (ethernet), and MPLS LABEL indicates multi-protocol label switching (multi-protocol label switching) label (label). It should be noted that the ingress device, the transit device, and the egress device in this embodiment of this application may be collectively referred to as transmission devices, bearer devices, bearer nodes, or gateway devices. This is not limited herein.

### III. End-to-end measurement technology on a wireless network and a bearer network

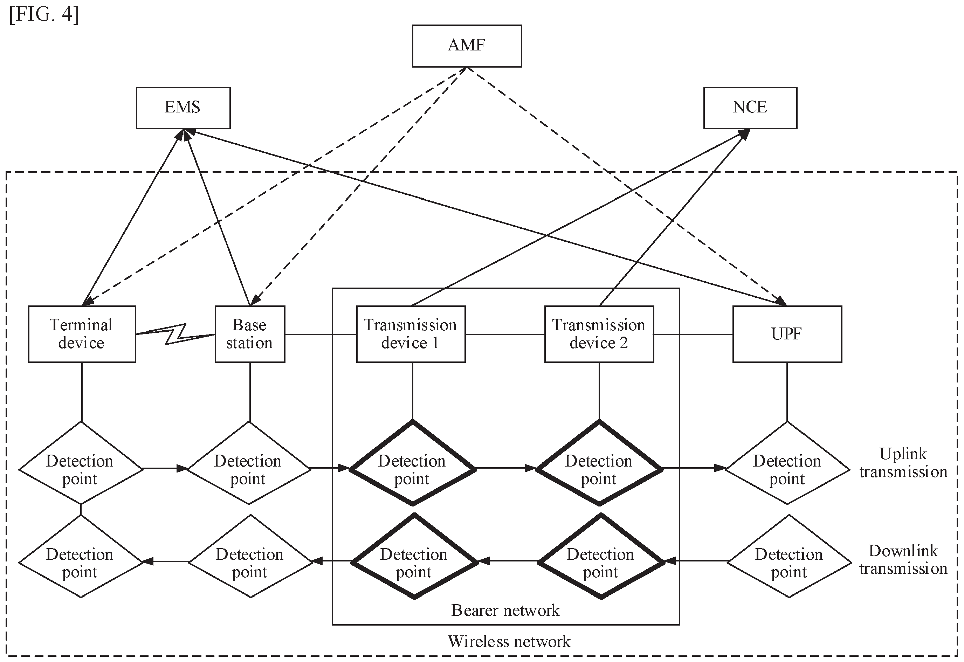

FIG. 4 is a diagram of end-to-end transmission measurement on a wireless network and a bearer network. A specific procedure includes the following steps.
1. An AMF controls a terminal device, a base station, and a UPF to start QoS monitoring, and collectively reports measurement data to a network management device in the wireless network, where the network management device in the wireless network may be an EMS.
2. Wireless network maintenance personnel manually obtain flow identification information that needs to be measured, and notify bearer network maintenance personnel; the bearer network maintenance personnel manually input the flow identification information, and control a transmission device in the bearer network to start hop-by-hop flow detection for a service flow; and the transmission device in the bearer network reports measurement data to a network management device in the bearer network, where the network management device in the bearer network may be an NCE.
3. If the flow identification information that needs to be measured changes, repeat step 2.

Because an encapsulation format and a flow identifier definition of service data in the wireless network are inconsistent with those in the bearer network, different networks cannot communicate with each other. Therefore, end-to-end automatic transmission measurement on the wireless network and the bearer network cannot be implemented.

Therefore, embodiments of this application provide a data measurement method. In the method, end-to-end (device-to-device) automatic measurement on the wireless network and the bearer network can be implemented.

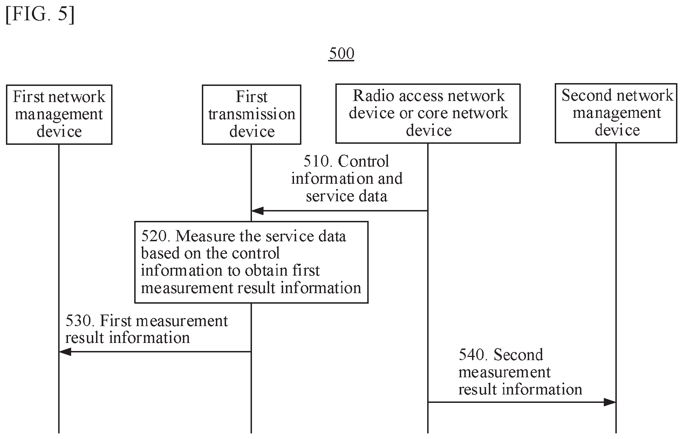

FIG. 5 is a schematic flowchart of a data measurement method 500 according to an embodiment of this application. In this embodiment of this application, a first transmission device may be an ingress device or an egress device in a bearer network, a radio access network device may be a base station, a core network device may be a UPF, and a terminal device may be UE.

510. The radio access network device or the core network device sends control information and service data to the first transmission device, where the control information includes at least one of the following of the service data: first flow identification information, measurement manner information, measurement periodicity information, or measurement type information, and the first flow identification information is flow identification information of the service data in a wireless network; and correspondingly, the first transmission device receives the control information and the service data. The control information is used to control at least one transmission device in a bearer network to measure the service data, and the at least one transmission device includes the first transmission device.

For example, the radio access network device sends the control information and the service data to the first transmission device. Correspondingly, the first transmission device receives the control information and the service data that are from the radio access network device, and the first transmission device is the ingress device in the bearer network. This example is uplink transmission of the service data.

For example, the core network device sends the control information and the service data to the first transmission device. Correspondingly, the first transmission device receives the control information and the service data that are from the core network device, and the first transmission device is the egress device in the bearer network. This example is downlink transmission of the service data.

Optionally, the measurement manner information indicates a per-packet measurement manner or a sampling measurement manner.

Optionally, the measurement type information indicates at least one of the following: packet loss rate measurement, packet loss quantity measurement, delay measurement, throughput measurement, or jitter measurement.

Optionally, the control information and the service data are carried in a user plane packet.

In an implementation, the control information is carried in an IP extension header, a UDP extension header, or a GTPU extension header of the user plane packet. In this implementation, after receiving the user plane packet, the first transmission device performs a snooping (snooping) operation on the user plane packet, to obtain the control information.

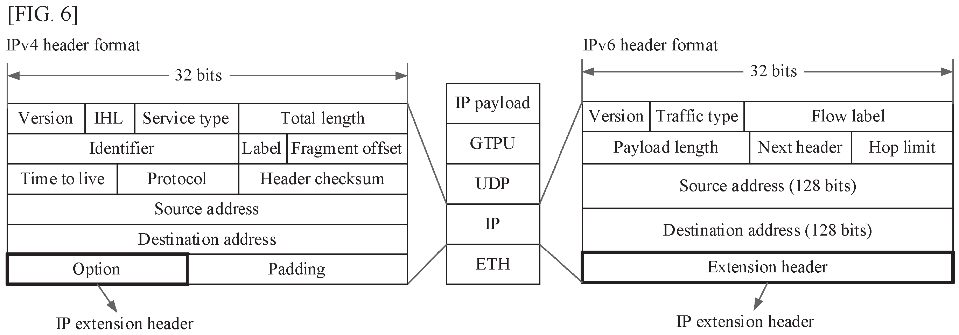

For example, the user plane packet is a GTPU user plane service packet. An IP extension header is added to the GTPU user plane service packet, the control information is carried in the added IP extension header, and the control information and the service data are sent to the first transmission device together. FIG. 6 is a diagram of adding an IP extension header to a GTPU user plane service packet. The left part corresponds to an IPv4 header format, and the right part corresponds to an IPv6 header format. IHL indicates an internet header length (internet header length).

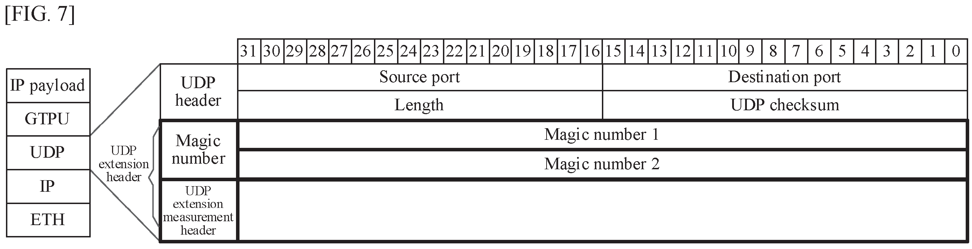

For another example, the user plane packet is a GTPU user plane service packet. A UDP extension header is added to the GTPU user plane service packet, the control information is carried in the added UDP extension header, and the control information and the service data are sent to the first transmission device together. FIG. 7 is a diagram of adding a UDP extension header to a GTPU user plane service packet. Specifically, a magic number (probe marker) and a UDP extension measurement header are added after a UDP header.

Optionally, the control information is carried in a control plane packet, and the service data is carried in a user plane packet. In this optional solution, the control information and the service data are respectively sent to the first transmission device by using different information/packets.

In an implementation, the control information is carried in an IP extension header, a transmission control protocol (transmission control protocol, TCP) extension header, a UDP extension header, or a GTPU extension header of the control plane packet, and a destination address of the control plane packet is address information of a radio access network device or a core network device. Specifically, when the first transmission device is the ingress device in the bearer network or uplink transmission is performed, the destination address of the control plane packet is the address information of the core network device. When the first transmission device is the egress device in the bearer network or downlink transmission is performed, the destination address of the control plane packet is the address information of the radio access network device. In this implementation, after receiving the control plane packet, the first transmission device performs a snooping operation on the control plane packet, to obtain the control information.

For example, the control plane packet includes a GTPU ECHO packet, an internet control message protocol (internet control message protocol, ICMP) packet, a two-way active measurement protocol (two-way active measurement protocol, TWAMP) packet, or a UDP packet. The control plane packet may alternatively include another existing control plane packet. This is not limited in this application.

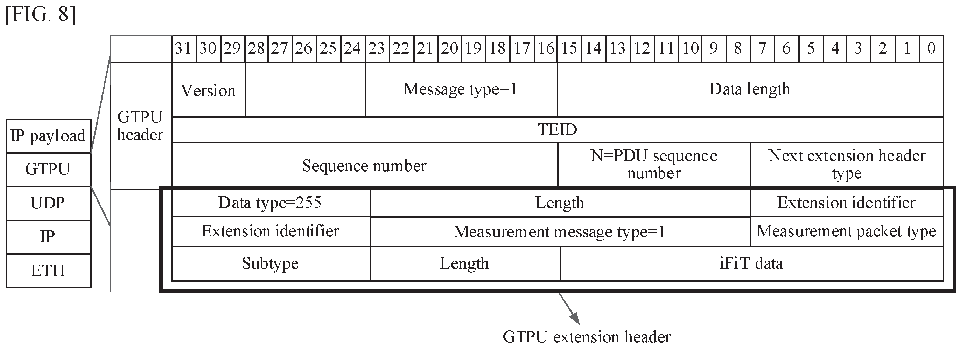

For example, the control plane packet is a GTPU ECHO packet. A GTPU extension header is added to the GTPU ECHO packet, and the control information is carried in the added GTPU extension header. FIG. 8 is a diagram of adding a GTPU extension header to a GTPU ECHO packet.

In an implementation, the control information is carried in an IP extension header or an IP packet payload of the control plane packet, and a destination address of the control plane packet is address information of the first transmission device. In this implementation, the radio access network device and the core network device do not send the control information by using an extended existing packet, but send the control information by using a specific/newly constructed control plane packet. Because the destination address of the control plane packet is the address information of the first transmission device, after receiving the control plane packet, the first transmission device may directly parse the control plane packet, to obtain the control information.

For example, the control plane packet includes an ICMP packet, a TCP packet, a UDP packet, a stream control transmission protocol (stream control transmission protocol, SCTP) packet, or another IP packet. For example, if the control plane packet is an IP packet, the control information may be carried in an IP extension header or an IP packet payload. The control plane packet may alternatively be any other specific or newly constructed control plane packet. This is not limited in this application.

Optionally, before the radio access network device or the core network device sends the control information and the service data to the first transmission device, an AMF controls the terminal device, the radio access network device, and the core network device in the wireless network to start QoS monitoring, and collectively reports respective measurement result information to the core network device. The flow identification information of the service data in the wireless network may include one or more of a tunnel endpoint identifier (tunnel endpoint identifier, TEID), a quality of service flow identifier (QoS flow identifier), a flow protocol type of the service data, a protocol port number of the radio access network device, a protocol port number of the core network device, an IP of the radio access network device, an IP of the core network device, or an IPv6 flow label (flow label) of the radio access network device.

520. The first transmission device measures the service data based on the control information to obtain first measurement result information. For example, the first transmission device performs in-situ flow information telemetry (in-situ flow information telemetry, iFiT), in-band operation, administration, and maintenance (In-band operation, administration, and maintenance, IOAM), or flow measurement in another manner on the service data based on the control information to obtain the first measurement result information.

Optionally, before measuring the service data based on the control information, the first transmission device converts the first flow identification information into second flow identification information, and stores a mapping relationship between the first flow identification information and the second flow identification information. The second flow identification information is flow identification information of the service data in the bearer network. The first measurement result information includes the mapping relationship between the first flow identification information and the second flow identification information.

Optionally, a uniform network management device may allocate uniform flow identification information, and the flow identification information of the service data in the wireless network is the same as that in the bearer network. In this optional solution, the first transmission device does not need to convert the flow identification information of the service data, and the radio access network device, the core network device, and the transmission device (including the first transmission device) that is in the bearer network may measure the service data based on the uniform flow identification information. The uniform network management device may be understood as a device that uniformly manages a network management device in the wireless network and a network management device in the bearer network.

530. The first transmission device sends the first measurement result information to a first network management device; and correspondingly, the first network management device receives the first measurement result information.

It should be noted that transmission devices in the bearer network measure the service data based on the control information, and send respective first measurement result information to the first network management device. The first network management device receives, from the transmission devices, the respective first measurement result information corresponding to the transmission devices.

540. The radio access network device and the core network device respectively send second measurement result information to a second network management device, where the second measurement result information is obtained by measuring the service data based on the control information. For example, the radio access network device measures the service data based on the control information to obtain the second measurement result information, and sends the second measurement result information to the second network management device. The core network device measures the service data based on the control information to obtain the second measurement result information, and sends the second measurement result information to the second network management device. Correspondingly, the second network management device receives the second measurement result information respectively sent by the radio access network device and the core network device in the wireless network. In embodiments of this application, network management devices in the wireless network may be collectively referred to as the second network management device. For example, a network management device of the radio access network device and a network management device of the core network device may be collectively referred to as the second network management device.

Optionally, the terminal device measures the service data based on the control information to obtain the second measurement result information, and sends, to the radio access network device, the second measurement result information obtained by the terminal device. The radio access network device may directly report, to the network management device of the radio access network device, the second measurement result information obtained by the terminal device. The radio access network device may alternatively report, to the core network device, the second measurement result information obtained by the terminal device, and then the core network device reports the second measurement result information to the network management device of the core network device.

Step 540 may be performed before step 510, or step 540 may be performed at any time between step 510 and step 530. This is not limited in this embodiment of this application.

In the technical solution provided in this embodiment of this application, the radio access network device or the core network device in the wireless network may send, to the transmission device (the first transmission device) in the bearer network, the control information used to measure the service data, and the transmission device in the bearer network may automatically measure the service data from the wireless network based on the control information. Compared by manual flow identification information input by wireless network maintenance personnel and bearer network maintenance personnel, this application can implement end-to-end (device-to-device) automatic measurement on a wireless network and a bearer network.

Optionally, the first network management device is the network management device in the bearer network, for example, the first network management device is an NCE, and the second network management device is the network management device in the wireless network, for example, the second network management device is an EMS. Optionally, the first network management device sends the first measurement result information to the uniform network management device, and the second network management device sends the second measurement result information to the uniform network management device. Correspondingly, the uniform network management device receives the first measurement result information and the second measurement result information, and determines, based on the first measurement result information and the second measurement result information, at least one of the following of the service data on a transmission path: packet loss rate, delay, throughput, or jitter of . The transmission path of the service data includes: the terminal device → the radio access network device → the transmission device (for example, the first transmission device) in the bearer network → the core network device, or the core network device → the transmission device (for example, the first transmission device) in the bearer network → the radio access network device → the terminal device.

Optionally, the first network management device and the second network management device are the same network management device. For example, the first network management device is the foregoing uniform network management device. The uniform network management device determines, based on the first measurement result information and the second measurement result information, at least one of the following of the service data on a transmission path: packet loss rate, delay, throughput, or jitter.

The following describes the data measurement method provided in embodiments of this application with reference to a specific example. In this example, a transmission path of service data is used as an example: a terminal device → a radio access network device → a transmission device (for example, a first transmission device) in a bearer network → a core network device.

Step 1: An AMF controls a terminal device, a radio access network device, and a core network device in a wireless network to start QoS monitoring, and collectively reports respective measurement result information to the core network device.

Step 2: The radio access network device in the wireless network starts to measure service data whose flow identification information is first flow identification information, and obtains second measurement result information, where the radio access network device measures the service data in a per-packet measurement manner or a sampling measurement manner, a measurement parameter or type is at least one of the following: packet loss rate, delay, throughput, or jitter, and a measurement periodicity is T.

It should be noted that the terminal device and the core network device in the wireless network also start to measure the service data whose flow identification information is the first flow identification information, and obtain respective second measurement result information.

Step 3: The radio access network device sends control information and the service data to the first transmission device in the bearer network, where the control information includes the first flow identification information, measurement manner information, measurement periodicity information, and measurement type information of the service data, where the measurement manner information indicates a per-packet measurement manner or a sampling measurement manner, the measurement periodicity information indicates that a measurement periodicity is T, the measurement type information indicates at least one of the following: packet loss rate measurement, packet loss quantity measurement, delay measurement, throughput measurement, or jitter measurement, and the first transmission device is an ingress device in the bearer network; and correspondingly, the first transmission device receives the control information and the service data that are from the radio access network device.

Step 4: The first transmission device converts the first flow identification information into second flow identification information, and stores a mapping relationship between the first flow identification information and the second flow identification information, where the second flow identification information is flow identification information of the service data in the bearer network.

Step 5: The first transmission device measures the service data based on the control information to obtain first measurement result information. For example, the first transmission device performs in-situ flow information telemetry, IOAM, or flow measurement in another manner on the service data based on the control information to obtain the first measurement result information. The first measurement result information includes the mapping relationship between the first flow identification information and the second flow identification information.

It should be noted that the transmission devices in the bearer network measure the service data based on the control information to obtain respective first measurement result information.

Step 6: The transmission devices in the bearer network respectively send, to a first network management device, the first measurement result information obtained by the transmission devices, and correspondingly, the first network management device receives the first measurement result information, where the first network management device is a network management device in the bearer network, for example, the first network management device is an NCE. The radio access network device and the core network device in the wireless network respectively send, to a second network management device, the second measurement result information obtained by the radio access network device and the core network device, and correspondingly, the second network management device receives the second measurement result information, where network management devices in the wireless network may be collectively referred to as the second network management device, for example, a network management device of the radio access network device and a network management device of the core network device may be collectively referred to as the second network management device.

Optionally, the terminal device measures the service data based on the control information to obtain the second measurement result information, and sends, to the radio access network device, the second measurement result information obtained by the terminal device. The radio access network device may directly report, to the network management device of the radio access network device, the second measurement result information obtained by the terminal device. The radio access network device may alternatively report, to the core network device, the second measurement result information obtained by the terminal device, and then the core network device reports the second measurement result information to the network management device of the core network device.

Step 7: The first network management device sends the first measurement result information to a uniform network management device (or a third-party service device), and the second network management device sends the second measurement result information to the uniform network management device (or the third-party service device), where the uniform network management device (or the third-party service device) may be understood as a device that uniformly manages the network management device in the wireless network and the network management device in the bearer network. Correspondingly, the uniform network management device receives the first measurement result information from the first network management device and the second measurement result information from the second network management device.

Step 8: The uniform network management device (or the third-party service device) determines, based on the first measurement result information and the second measurement result information, at least one of the following of the service data on the transmission path: packet loss rate, delay, throughput, or jitter.

The foregoing describes the data measurement method provided in embodiments of this application. The following describes execution bodies for performing the foregoing data measurement method.

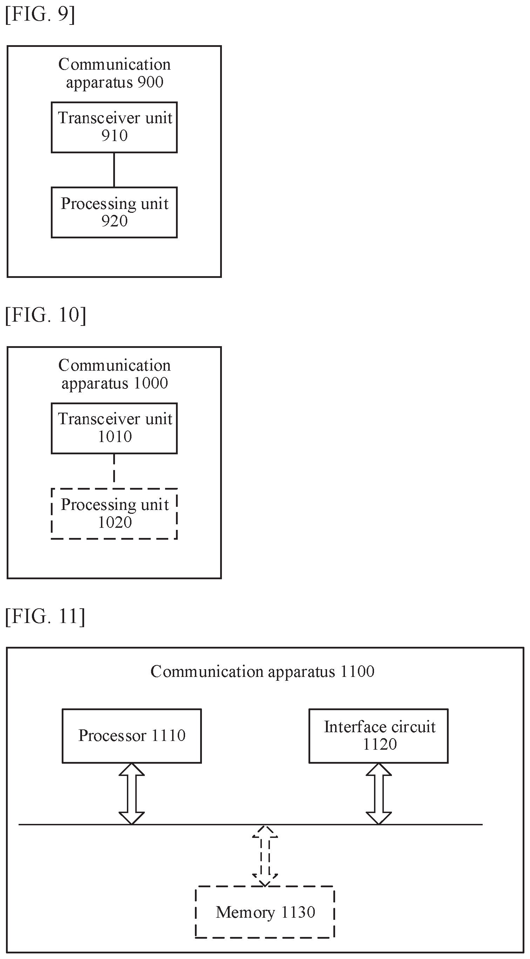

FIG. 9 is a block diagram of a communication apparatus 900 according to an embodiment of this application. The apparatus may be used in or deployed in the first transmission device in the method embodiments of this application. The communication apparatus 900 includes:
a transceiver unit 910, configured to receive control information and service data, where the control information includes at least one of the following of the service data: first flow identification information, measurement manner information, measurement periodicity information, or measurement type information, and the first flow identification information is flow identification information of the service data in a wireless network; and
a processing unit 920, configured to measure the service data based on the control information to obtain first measurement result information.

The transceiver unit 910 is further configured to send the first measurement result information to a first network management device.

Optionally, the processing unit 920 is further configured to convert the first flow identification information into second flow identification information, where the second flow identification information is flow identification information of the service data in the bearer network, and the first measurement result information includes a mapping relationship between the first flow identification information and the second flow identification information.

Optionally, the measurement manner information indicates a per-packet measurement manner or a sampling measurement manner.

Optionally, the measurement type information indicates at least one of the following: packet loss rate measurement, packet loss quantity measurement, delay measurement, throughput measurement, or jitter measurement.

Optionally, the control information and the service data are carried in a user plane packet.

Optionally, the control information is carried in an internet protocol IP extension header, a user datagram protocol UDP extension header, or a general packet radio service tunneling protocol user plane GTPU extension header of the user plane packet.

Optionally, the control information is carried in a control plane packet, and the service data is carried in a user plane packet.

Optionally, the control information is carried in an IP extension header, a transmission control protocol TCP extension header, a UDP extension header, or a GTPU extension header of the control plane packet, and a destination address of the control plane packet is address information of a radio access network device or a core network device.

Optionally, the control plane packet includes a GTPU ECHO packet, an internet control message protocol ICMP packet, a two-way active measurement protocol TWAMP packet, or a UDP packet.

Optionally, the control information is carried in an IP extension header or an IP packet payload of the control plane packet, and a destination address of the control plane packet is address information of the first transmission device.

Optionally, the control plane packet includes an ICMP packet, a TCP packet, a UDP packet, an SCTP packet, or another IP packet.

FIG. 10 is a block diagram of another communication apparatus 1000 according to an embodiment of this application. The apparatus may be used in or deployed in a radio access network device or a core network device in the method embodiments of this application. The communication apparatus 1000 includes:

a transceiver unit 1010, configured to send control information and service data to a first transmission device, where the control information includes at least one of the following of the service data: flow identification information, measurement manner information, measurement periodicity information, or measurement type information, the control information is used to control at least one transmission device in a bearer network to measure the service data, and the at least one transmission device includes the first transmission device.

The transceiver unit 1010 is further configured to send second measurement result information to a second network management device, where the second measurement result information is obtained by measuring the service data based on the control information. Optionally, the communication apparatus 1000 further includes a processing unit 1020, configured to measure the service data based on the control information.

Optionally, the measurement manner information indicates a per-packet measurement manner or a sampling measurement manner.

Optionally, the measurement type information indicates at least one of the following: packet loss rate measurement, packet loss quantity measurement, delay measurement, throughput measurement, or jitter measurement.

Optionally, the control information and the service data are carried in a user plane packet.

Optionally, the control information is carried in an IP extension header, a UDP extension header, or a GTPU extension header of the user plane packet.

Optionally, the control information is carried in a control plane packet, and the service data is carried in a user plane packet.

Optionally, the control information is carried in an IP extension header, a TCP extension header, a UDP extension header, or a GTPU extension header of the control plane packet, and a destination address of the control plane packet is address information of a radio access network device or a core network device.

Optionally, the control plane packet includes a GTPU ECHO packet, an ICMP packet, a TWAMP packet, or a UDP packet.

Optionally, the control information is carried in an IP extension header or an IP packet payload of the control plane packet, and a destination address of the control plane packet is address information of the first transmission device.

Optionally, the control plane packet includes an ICMP packet, a TCP packet, a UDP packet, an SCTP packet, or another IP packet.

FIG. 11 is a block diagram of another communication apparatus 1100 according to an embodiment of this application. The communication apparatus 1100 includes a processor 1110 and an interface circuit 1120. The processor 1110 and the interface circuit 1120 are coupled to each other. It can be understood that the interface circuit 1120 may be a transceiver or an input/output interface.

Optionally, the communication apparatus 1100 may further include a memory 1130, configured to store instructions executed by the processor 1110, store input data needed by the processor 1110 to run the instructions, or store data generated after the processor 1110 runs the instructions.

When the communication apparatus 1100 is used in a first transmission device, the communication apparatus 1100 may implement a function of the first transmission device in the foregoing method embodiments. When the communication apparatus 1100 is used in a radio access network device or a core network device, the communication apparatus 1100 may implement functions of the radio access network device or the core network device in the foregoing method embodiments.

The processor 1110 may be an integrated circuit chip and has a signal processing capability. In an implementation process, steps in the foregoing method embodiments can be implemented by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor.

Optionally, an embodiment of this application further provides a communication apparatus. The communication apparatus includes an input/output interface and a logic circuit. The input/output interface is configured to obtain input information and/or output information. The logic circuit is configured to perform the method according to any one of the foregoing method embodiments, and process and/or generate the output information based on the input information.

An embodiment of this application further provides a communication system, including a first transmission device in the data measurement method provided in embodiments of this application, another communication device communicating with the first transmission device, a radio access network device, another communication device communicating with the radio access network device, a core network device, and another communication device communicating with the core network device.

An embodiment of this application further provides a computer-readable storage medium. The computer-readable storage medium stores a computer program used to implement the method in the foregoing method embodiments. When the computer program is run on a computer, the method in the foregoing method embodiments is implemented.

An embodiment of this application further provides a computer program product. The computer program product includes a computer program. When the computer program is run on a computer, the method in the foregoing method embodiments is implemented.

An embodiment of this application further provides a chip, including a processor. The processor is connected to a memory, the memory is configured to store a computer program, and the processor is configured to execute the computer program stored in the memory, to cause the chip to perform the method in the foregoing method embodiments.

It should be understood that, in embodiments of this application, numbers "first", "second", and the like are merely used to distinguish between different objects, for example, to distinguish between different flow identification information or measurement result information, and do not constitute a limitation on the scope of embodiments of this application. Embodiments of this application are not limited thereto.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

## Claims

1. A data measurement method, applied to a first transmission device in a bearer network, wherein the method comprises:
receiving control information and service data, wherein the control information comprises at least one of the following of the service data: first flow identification information, measurement manner information, measurement periodicity information, or measurement type information, and the first flow identification information is flow identification information of the service data in a wireless network;
measuring the service data based on the control information to obtain first measurement result information; and
sending the first measurement result information to a first network management device.

2. The method according to claim 1, wherein the method further comprises:
converting the first flow identification information into second flow identification information, wherein the second flow identification information is flow identification information of the service data in the bearer network, and the first measurement result information comprises a mapping relationship between the first flow identification information and the second flow identification information.

3. The method according to claim 1 or 2, wherein
the measurement manner information indicates a per-packet measurement manner or a sampling measurement manner.

4. The method according to any one of claims 1 to 3, wherein
the measurement type information indicates at least one of the following: packet loss rate measurement, packet loss quantity measurement, delay measurement, throughput measurement, or jitter measurement.

5. The method according to any one of claims 1 to 4, wherein
the control information and the service data are carried in a user plane packet.

6. The method according to claim 5, wherein
the control information is carried in an internet protocol IP extension header, a user datagram protocol UDP extension header, or a general packet radio service tunneling protocol user plane GTPU extension header of the user plane packet.

7. The method according to any one of claims 1 to 4, wherein
the control information is carried in a control plane packet, and the service data is carried in a user plane packet.

8. The method according to claim 7, wherein
the control information is carried in an IP extension header, a transmission control protocol TCP extension header, a UDP extension header, or a GTPU extension header of the control plane packet, and a destination address of the control plane packet is address information of a radio access network device or a core network device.

9. The method according to claim 8, wherein
the control plane packet comprises a GTPU ECHO packet, an internet control message protocol ICMP packet, a two-way active measurement protocol TWAMP packet, or a UDP packet.

10. The method according to claim 7, wherein
the control information is carried in an IP extension header or an IP packet payload of the control plane packet, and a destination address of the control plane packet is address information of the first transmission device.

11. The method according to claim 10, wherein
the control plane packet comprises an ICMP packet, a TCP packet, a UDP packet, or a stream control transmission protocol SCTP packet.

12. A data measurement method, applied to a radio access network device or a core network device, wherein the method comprises:
sending control information and service data to a first transmission device, wherein the control information comprises at least one of the following of the service data: flow identification information, measurement manner information, measurement periodicity information, or measurement type information, the control information is used to control at least one transmission device in a bearer network to measure the service data, and the at least one transmission device comprises the first transmission device; and
sending second measurement result information to a second network management device, wherein the second measurement result information is obtained by measuring the service data based on the control information.

13. The method according to claim 12, wherein
the measurement manner information indicates a per-packet measurement manner or a sampling measurement manner.

14. The method according to claim 12 or 13, wherein
the measurement type information indicates at least one of the following: packet loss rate measurement, packet loss quantity measurement, delay measurement, throughput measurement, or jitter measurement.

15. The method according to any one of claims 12 to 14, wherein
the control information and the service data are carried in a user plane packet.

16. The method according to claim 15, wherein
the control information is carried in an IP extension header, a UDP extension header, or a GTPU extension header of the user plane packet.

17. The method according to any one of claims 12 to 14, wherein
the control information is carried in a control plane packet, and the service data is carried in a user plane packet.

18. The method according to claim 17, wherein
the control information is carried in an IP extension header, a TCP extension header, a UDP extension header, or a GTPU extension header of the control plane packet, and a destination address of the control plane packet is address information of a radio access network device or a core network device.

19. The method according to claim 18, wherein
the control plane packet comprises a GTPU ECHO packet, an ICMP packet, a TWAMP packet, or a UDP packet.

20. The method according to claim 17, wherein
the control information is carried in an IP extension header or an IP packet payload of the control plane packet, and a destination address of the control plane packet is address information of the first transmission device.

21. The method according to claim 20, wherein
the control plane packet comprises an ICMP packet, a TCP packet, a UDP packet, or an SCTP packet.

22. A communication apparatus, comprising a unit configured to perform the method according to any one of claims 1 to 11.

23. A communication apparatus, comprising a unit configured to perform the method according to any one of claims 12 to 21.

24. A communication apparatus, comprising a processor and an interface circuit, wherein the interface circuit is configured to receive a signal from another communication apparatus and transmit the signal to the processor or send a signal from the processor to another communication apparatus, and the processor is configured to implement the method according to any one of claims 1 to 21 by using a logic circuit or executing code instructions.

25. A computer-readable storage medium, wherein
the computer-readable medium stores a computer program; and
when the computer program is run by a processor, the method according to any one of claims 1 to 21 is performed.

26. A computer program product, comprising a computer program, wherein when the computer program is executed, the method according to any one of claims 1 to 21 is implemented.

27. A communication system, comprising a first transmission device and a first communication apparatus, wherein the first communication apparatus is a radio access network device or a core network device, the first transmission device is configured to perform the method according to any one of claims 1 to 11, and the first communication apparatus is configured to perform the method according to any one of claims 12 to 21.
